# EUROPEAN PATENT SPECIFICATION

(11) **EP 1 526 494 B1**
(45) Date of publication and mention of the grant of the patent: **27.02.2008**
(21) Application number: 04256515.0
(22) Date of filing: 22.10.2004
(51) Int. Cl.: G08G 1/0968, G01C 21/36, G08G 1/0962

(54) **Navigation apparatus and service providing method**
Navigationsvorrichtung und Dienstleistungsverfahren
Dispositif de navigation et procédé pour le fournissement d'un service

(30) Priority: 24.10.2003 JP 2003364014
(43) Date of publication of application: 27.04.2005
(73) Proprietor: Sony Corporation, Tokyo 141-0001 (JP)
(72) Inventor: Shinada, Akira, c/o Sony Corporation, Shinagawa-ku, Tokyo 141-0001 (JP)
(74) Representative: Nicholls, Michael John

(56) References cited:
- US-B1- 6 202 022
- US-B1- 6 505 165

## Description

The present invention relates to a navigation apparatus and a service providing method of using a navigation apparatus, and can be applied to, for example, a car navigation apparatus. The present invention is designed such that a server is accessed, on the basis of position information related to a current position at the time when a user carries out a marking, and the detailed information of the shops and facilities which are related to the marking is obtained, and the shops and the facilities are specified in accordance with the taste of the user, and it is consequently possible to simplify a process for registering the shops and the like discovered while a vehicle is running.

Conventionally, a car navigation apparatus is designed such that not only can a road be merely guided to the user through a map, but also the marks of, for example, a famous restaurant, a resort and the like in the vicinity of a destination can be displayed by the operation of the user, which can consequently improve the convenience.

The marks related to the shops and the like as mentioned above are designed such that the various marks are prepared for each genre of the shops and facilities, and not only are they preliminarily registered in the car navigation apparatus, but also they can be further registered by the operation of the user.

Consequently, the user, for example, in a case of discovering a newly opened restaurant during the running, can execute the marking operation and tentatively register this newly opened restaurant in the car navigation apparatus. Also, after the tentative registration as mentioned above, in future, by setting attribute of the shop related to this tentatively registered marking and the like, a process for the regular registration will be executed. Consequently, for example, in accordance with the instruction of the displaying of the shops and facilities which correspond to this attribute, the mark registered by the user as mentioned above, together with the mark preliminarily registered in the car navigation apparatus are displayed on the map.

In the registration carried out by the user as mentioned above, although there is a merit that the shop satisfying likes and tastes of the user and the like can be registered as necessary, there is a problem of a complex operation because the attribute and the like must be inputted by the operation of the user. Also, as for the above-mentioned input information, the input which relies on the memory of the user prevents the shop name and the like from being accurately inputted, which may bring about, for example, a case that the shop is closed because of its regular holiday or the like although the user expressly comes to the shop.

As one method of solving this problem, for example, as proposed in Japanese Patent Application Publication (KOKAI) No. HEI 11-132173, a method may be considered which obtains information with regard to a shop corresponding to a telephone number or the like used for query by connecting to the Internet. However, even in this case, it is necessary to separately obtain information serving as a key such as the telephone number or the like.

US-B1-6,202,022, which is considered to represent the closest prior art, discloses an apparatus and method according to the pre-characterizing portions of the independent claims appended hereto.

The present invention is proposed in view of the above-mentioned circumstances. Therefore, the present invention is to provide a navigation apparatus that can simplify the process for registering a shop or the like which is discovered while a vehicle is running, and a service providing method of using the navigation apparatus.

In order to solve the above-mentioned problems, a first aspect of the present invention is applied to a navigation apparatus for displaying a mark indicative of a genre of a shop and/or a facility on a map to guide a road to a user. The navigation apparatus comprises:
an operator for receiving an operation of a marking carried out by the user;
position information obtaining means for obtaining position information of a current position through an operation of said operator;
information obtaining means for accessing a download server on the basis of said position information and obtaining and recording detailed information of said shop and/or facility at said current position; and
displaying means for displaying a mark corresponding to the obtained detailed information on said map, and characterized by:
   further comprising a tendency database in which the number of shops and/or facilities of each genre registered in a favourite list of the user is totalized, thereby indicating the taste of the user; and
   whereby said information obtaining means is arranged to detect a genre of each shop and/or facility obtained on the basis of said position information, and selectively obtains and records said detailed information of said shop and/or facility satisfying said taste of the user on the basis of said tendency database, in accordance with the detected genre.

Also, a second aspect of the present invention provides a service providing method using a navigation apparatus for displaying a mark indicative of a genre of a shop and/or facility on a map for guiding a user along a road, said service providing method comprising:
a position information obtaining step of obtaining position information of a current position through a marking operation carried out by the user;
an information obtaining step of accessing a download server on the basis of said position information and obtaining and recording detailed information of said shop and/or facility at said current position; and
a displaying step of displaying a mark corresponding to the obtained detailed information on said map, and characterized in that:
   said information obtaining step further comprises obtaining information indicating the taste of the user from a tendency database in which the number of-shops and/or facilities of each genre registered in a favourite list of the user is totalized; and
   said information obtaining step detects a genre of each shop and/or facility obtained on the basis of said position information, and selectively obtains and records said detailed information of said shop and/or facility satisfying said taste of the user on the basis of said tendency database, in accordance with the detected genre.

Also, a third aspect of the present invention provides a service providing method using a navigation apparatus for displaying a mark indicative of a genre of a shop and/or facility on a map for guiding a user along a road, said service providing method comprising:
an information obtaining step of obtaining position information of a current position related to a marking operation carried out by the user in said navigation apparatus, through communicating means, and information indicative of a taste of the user;
an information detecting step of accessing a download server on the basis of said position information and detecting detailed information of said shop and/or facility which is located at said current position and satisfies said taste of the user; and
an information reporting step of reporting said detailed information detected at said information detecting step to said navigation apparatus,
characterized in that:
said information indicative of a taste of the user is obtained from a tendency database in which the number of shops and/or facilities of each genre registered in a favourite list of the user is totalized; and
said information detecting step further comprises detecting a genre of a shop and/or facility on the basis of said position information, and selectively detecting detailed information of said shop and/or facility satisfying said taste of the user on the basis of said tendency database, in accordance with the detected genre.

As mentioned above, according to the configuration of the first aspect of the present invention, it is possible to automatically obtain and record detail information regarding the shop and the facility located at the address on which the user executes the marking operation, thereby simplifying a process for registering a shop and the like discovered while the vehicle is running. Also, in the above-mentioned configuration, even in a case where a plurality of shops and facilities exist on the address on which the marking was performed by the user, the shops and facilities can be specified and the detailed information thereof can be obtained, in consideration of user's intention, thereby surely obtaining and registering the detailed information of the desired shops and facilities.

According to the second aspect of the present invention, it is possible to provide a service providing method using a navigation apparatus, which can simplify a process for registering a shop and the like discovered while a vehicle is running and the like.

Also, according to the third aspect of the present invention, it is possible to provide a service providing method using a navigation apparatus, in which position information related to the shop and the like according to the configuration of the second aspect and a selecting process based on a taste of a user can be executed on a server side, thereby simplifying a process for registering a shop and the like discovered while a vehicle is running.

According to the present invention, it is possible to simplify the process for registering the shop and the like discovered while the vehicle is running.

Embodiments of the invention will now be described, by way of example only, with reference to the accompanying drawings in which:
Fig. 1 is a flowchart showing a procedure for processing a central processing unit in a car navigation apparatus according to a first embodiment of the present invention;
Fig. 2 is a block diagram showing the car navigation apparatus according to the first embodiment of the present invention;
Fig. 3 is a table provided to explain a tendency database in the car navigation apparatus of Fig. 2;
Fig. 4 is a plan view provided to explain the processing procedure of Fig. 1;
Fig. 5 is a plan view indicating a representation through a mark registered by the processing process of Fig. 1; and
Fig. 6 is a plan view indicating a representation in a case that a business is not carried out in the processing process of Fig. 1.

### First Embodiment

### (1) Configuration of Embodiment

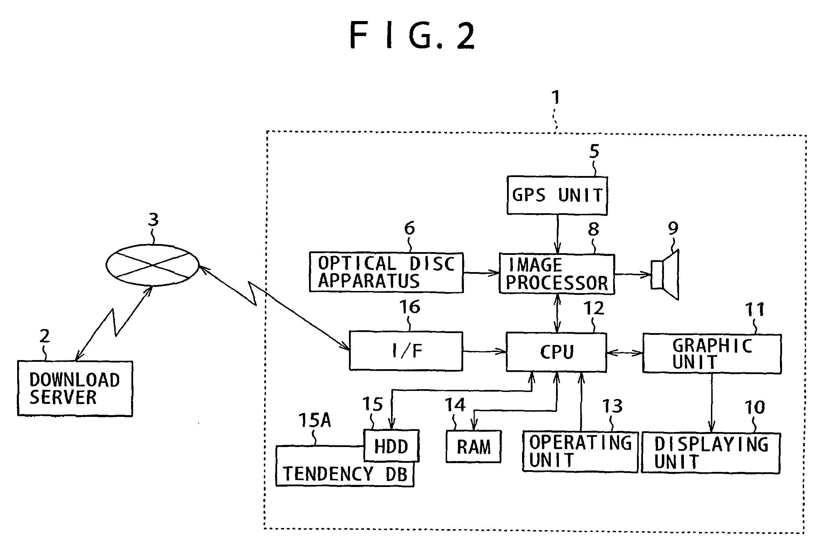

Fig. 2 is a block diagram showing a car navigation apparatus according to an embodiment of the present invention, together with its peripheral configuration. In this car navigation apparatus 1, detailed information of a shop and the like which is marked by a user is obtained from a download server 2 and provided to the user.

For this reason, the download server 2 comprises a computer that can be connected through the Internet 3, and provides the detailed information with regard to these shops and facilities to the car navigation apparatus 1, in response to the request from the car navigation apparatus 1.

Here, the detailed information related to these shops and facilities includes information to specify the shops and facilities, such as names, addresses, etc of the shops and facilities, attribute information related to a genre, and business information such as regular holidays, business hours, recommended goods and the like. The genre herein is set so as to correspond to the genre set in the car navigation apparatus 1. For example, regarding the shop, rough genres such as a restaurant, a bookstore, a hotel and the like, and fine genres such as a Japanese restaurant, a family restaurant, a Chinese noodle shop and the like are set.

The download server 2 is configured so that it is accessed in accordance with location and address used as criteria from the car navigation apparatus 1 and provides detailed information of an appropriate shop matching the criteria to the car navigation apparatus 1.

In the car navigation apparatus 1, a Global Positioning System (GPS) unit 5, detects position information of a current position by receiving and processing an electric wave obtained from a satellite of GPS, and outputs this position information. The car navigation apparatus 1 corrects the position information obtained by this GPS unit 5 on the basis of the detected result by an acceleration sensor so that it can detect the current position at a high precision.

An optical disc apparatus 6 accesses an optical disc in response to a request from an image processor 8, and consequently reads out map data of a destination and its vicinity, a current position and its vicinity or the like from the optical disc, and then outputs it. The image processor 8 generates an image to be displayed, in accordance with the map data outputted from this optical disc apparatus 6. Also, the image processor 8 generates voice data and the like to be used for road guidance in accordance with an instruction of the user, and drives a speaker 9 on the basis of this voice data. Consequently, this car navigation apparatus 1 can carry out the road guidance and the like even through the voice.

A displaying unit 10 comprises a liquid crystal displaying panel, and displays the information of the map and the shop and the like. A graphic unit 11 comprises a driving circuit for driving the displaying unit 10 under control of a central processing unit (CPU) 12. An operating unit 13 comprises an operator and a remote commander, which are placed on an operation panel of this car navigation apparatus 1, and reports the various operations by the user, to the CPU 12. A random access memory (RAM) 14 constitutes a work area of the CPU 12.

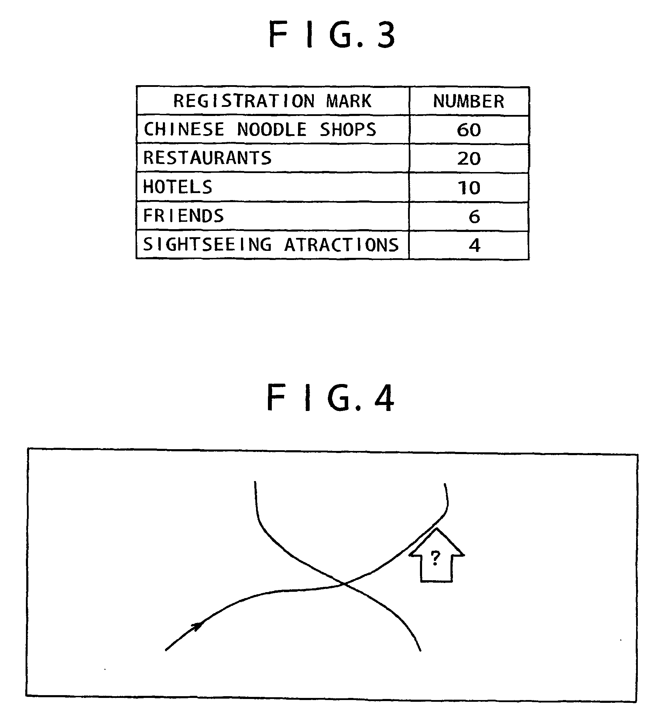

A hard disc device (HDD) 15 records and holds a processing program of the CPU 12, the data of the various items set by the user, a tendency database (tendency DB) 15A, an access record of the download server 2, the information related to the shop and facility, and the like. Here, the tendency database 15A is a database indicating a taste of the user. As shown in Fig. 3, it is prepared by totalizing the shops and facilities, which are registered in a favorite list by the user, for each genre. This example shown in Fig. 3 indicates that the user of this car navigation apparatus 1 has registered 60 Chinese noodle shops in the favorite list and that 20 restaurants, 10 hotels, 6 friends and 4 sightseeing attractions are also registered in each genre in the favorite list. Consequently, it is configured so that it can be judged that the user prefers the Chinese noodle from this tendency database 15A. In the car navigation apparatus 1, when the user instructs to display the favorite list, an appropriate mark each corresponding to items registered in the favorite list is displayed on the map to notify the user of a position of the shop or the like.

An interface (I/F) 16 comprises: communication means connected through a mobile telephone line to the Internet 3; and an input/output circuit for inputting/outputting various information between this communication means and the CPU 12. Then, its operation is switched by the control of the CPU 12.

The CPU 12 is a part of a computer for controlling the entire operation of this car navigation apparatus 1, and reserves a work area in the RAM 14, and then executes the series of the processing programs recorded in the HDD 15, and consequently displays the map through the displaying unit 10, and also executes the processes such as the road guidance and the like. By the way, these processing programs are provided by preliminarily installing in the HDD 15, or provided by installing the programs downloaded through the network, such as the Internet 3 and the like, and further installing the programs provided by various recording medium. Incidentally, as the above-mentioned recording medium, the recording medium including a magnetic disk, an optical disc, a magnetic tape and the like can be applied.

That is, the CPU 12, when the user inputs a destination and instructs the search of a route to this destination, searches the route to the destination in accordance with the information of the current position obtained by the GPS unit 5 and the map data obtained by the optical disc apparatus 6. Moreover, when the displaying of this route and the road guidance are instructed, appropriate processes are executed by the controls of the image processor 8 and the graphic unit 11. In these processes, when the user instructs displaying of the favorite list, the shop, the facility and the like which are related to the favorite list registered by the user are displayed on the map by using the marks corresponding thereto. Also, instead of the above-mentioned favorite list, if the user instructs the displaying of the shop and facility, for example, by specifying the genre of a parking area, a restaurant and the like, the marks of the shop and facility in the genre specified by the user are displayed on the map. Also, after the various marks are displayed as mentioned above, if the user selects a mark, the display shows the detailed information including the shop names, the holidays, the business hours, the recommended goods and the like of the shops and facilities which correspond to this mark. Consequently, this car navigation apparatus 1 provides an advice to the user in selecting a restaurant and the like, and improves the user's convenience.

On the contrary, if the user operates the operating unit 13 and instructs the marking of a shop, the CPU 12 tentatively registers the shop in the favorite list. Here, in the process of this tentative registration, the current position is set for the address, and the shop whose attribute is unknown is assumed to match the taste of the user, and recorded in the HDD 15. Thus, the tentative registration is completed.

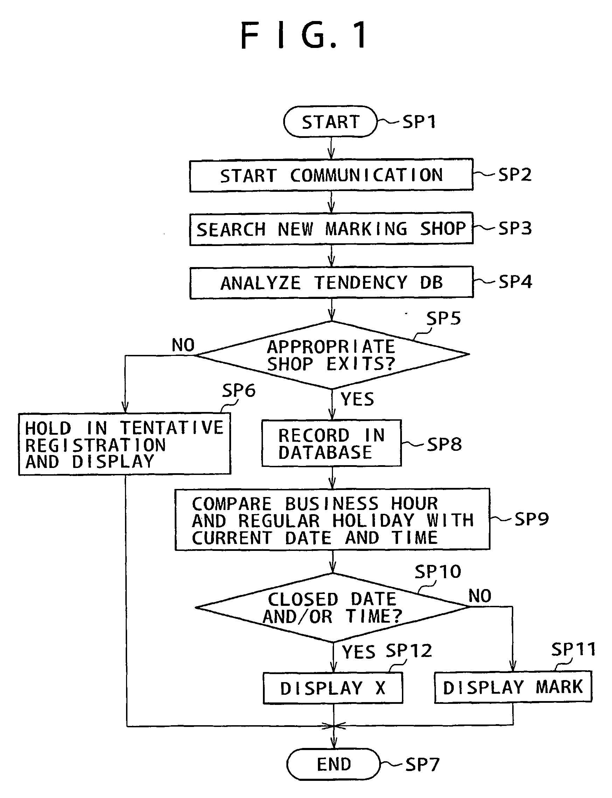

Also, after the tentative registration by the marking of the user as mentioned above, the CPU 12 obtains the detailed information of the shop thus tentatively registered from the download server 2, and executes the process for regular registration in accordance with this obtained detailed information, and then displays an appropriate mark on the map. Fig. 1 is a flowchart showing a processing procedure of the CPU 12 related to this regular registration. The CPU 12, when completing the process for this tentative registration, proceeds from a step SP1 to a step SP2. Then, the connection to the download server 2 is started by the control of the I/F 16.

In succession, the CPU 12 proceeds to a step SP3, and obtains the detailed information of the marked shop from the download server 2. At this time, the CPU 12 accesses the optical disc apparatus 6 on the basis of the current position detected by the GPS unit 5, detects the address corresponding to the current position, and searches the shops and facilities which are located at this address, and then obtains the detailed information. Also, since there may be a case where there is a time difference between the actual discovery of the shop by the user and the execution of the marking operation, the detailed information is obtained by searching the shops and facilities on the basis of the addresses in a certain range covering a moving route. The CPU 12 transiently records and holds this obtained detailed information in the HDD 15.

In succession, the CPU 12 proceeds to a step SP4, and here analyzes the tendency database 15A, and then detects the taste of the user. Concretely, the CPU 12 detects a genre, in which the number of registered items is large in the tendency database 15A, and consequently detects the genre of the shop and facility on which the taste of the user is reflected.

In succession, the CPU 12 proceeds to a step SP5, and judges whether or not the detailed information of the appropriate shop was detected at the step SP3. Here, if a negative result is obtained, it proceeds to a step SP6. In this step, the CPU 12 executes a process for the regular registration on the shop or the like marked by the user under the original condition of the tentative registration. After displaying the mark on the map in accordance with this regular registration, it proceeds to a step SP7, and ends this processing procedure. Consequently, in this case, the CPU 12 sets the current position for the address, as for this marking, and registers the shop whose attribute is unknown, in the favorite list of the user. As shown in Fig. 4, it superimposes a character [?] indicating that the detail is unknown, on the mark with an outline indicating a house, and displays on the map. Also, after such a mark is displayed, if the user selects this mark and instructs the registration of the detailed information, the input of the shop name, the genre or the like is received in response to the operation of the user.

On the contrary, if a positive result is obtained at the step SP5, the CPU 12 proceeds from the step SP5 to a step SP8, and regularly registers the detailed information transiently held in the HDD 15, in the database of the favorite list. In this process, if the plurality of shops and facilities are detected from the download server 2, the CPU 12 specifies the shops and facilities, which satisfy the taste of the user, from these plurality of shops and facilities in accordance with the genre detected at the step SP4, and executes the process for the regular registration on the basis of the detailed information related to these specified shops and facilities.

Consequently, in the case of the example shown in Fig. 3, in a case where the detailed information with regard to the plurality of registered items is detected from the download server 2, the CPU 12 uses the detailed information related to the Chinese noodle shop, the genre having the maximum number of the registered items, for the regular registration. On the contrary, in a case where the detailed information of the Chinese noodle shop is not included in the detected information, the detailed information related to the restaurant, the genre having the next maximum number of the registered items, is regularly registered.

If the regular registration is carried out as mentioned above, the CPU 12 proceeds to a step SP9, obtains the business information included in this registered detailed information, and judges whether or not they are currently open, at a next step SP10.

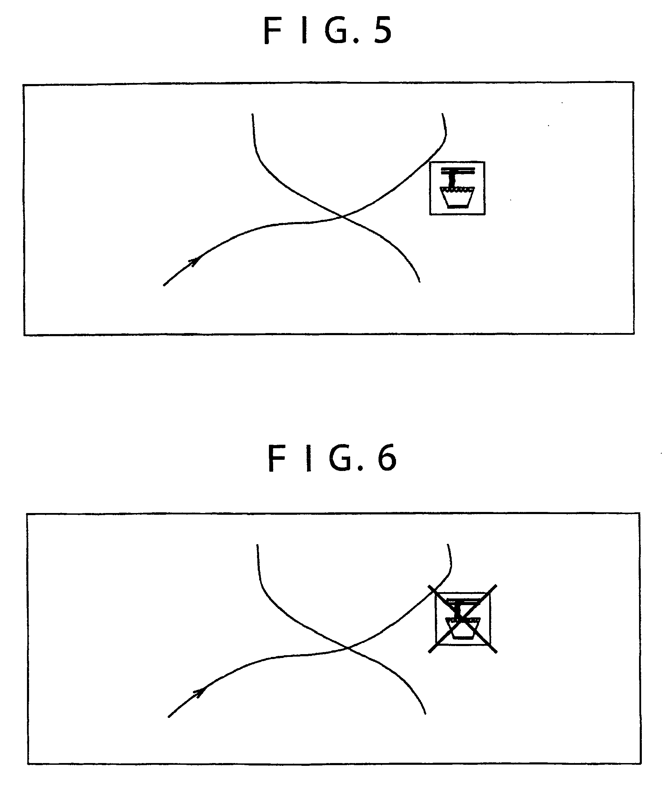

Here, if they are currently open, the CPU 12 proceeds from the step SP10 to a step SP11. After displaying the mark corresponding to the genre based on this detailed information on the map, it proceeds to the step SP7, and ends this processing procedure. Consequently, as shown in Fig. 5, if the detailed information registered regularly as mentioned above is related to the Chinese noodle shop, the CPU 12 displays a mark indicating a noodle bowl for the Chinese noodle on the map, as shown in Fig. 5.

On the contrary, if the marked shop or facility is not open, the CPU 12 proceeds from the step SP10 to the step SP11. Here, as shown in Fig. 6, it superimposes a cross on the mark corresponding to the genre based on this detailed information, and displays on the mark, and then proceeds to the step SP7, and ends this processing procedure.

However, after the marks shown in Figs. 5, 6 are indicated as mentioned above, if the user selects this mark, the CPU 12 displays the detailed information related to this mark, and consequently provides the information of the shop name, the recommended goods and the like, to the user.

### (2) Operation of Embodiment

In the above-mentioned configuration, in the car navigation apparatus 1 (Fig. 2), the position information of the current position obtained by the GPS unit 5 is defined as a reference, and the map data obtained by the reproduction from the optical disc in the optical disc apparatus 6 and the like are processed. Then, the map related to the road guidance to the destination, the map of the current position and its vicinity, the map of the destination and its vicinity, and the like are displayed on the displaying unit 10. Thus, the car navigation apparatus 1 provides the service of displaying the map and guiding the road and the like to the user.

Also, in the car navigation apparatus 1, for example, shops and facilities that the user has visited previously and shops and facilities that the user desires to visit are registered in the favorite list. Thus, the information with regard to these shops and facilities are recorded in the HDD 15. Also, in accordance with the instruction to display this favorite list, the marks indicating the genres of these shops and facilities are displayed on the appropriate positions on the map. Consequently, in the car navigation apparatus 1, for example, since the map of the current position and its vicinity is displayed and such marks are checked, the user's favorite restaurant and the like can be easily discovered, thereby improving the convenience. Also, for example, in accordance with the instruction of the user specifying the genres of the parking area, the restaurant and the like, the shop and the like of the appropriate genre are selected from the information introducing the shops and facilities which are recorded in the optical disc held in the optical disc apparatus 6, and this shop and the like are displayed on the map.

Consequently, in the car navigation apparatus 1, the mark indicating the genre of the shop and facility can be displayed on the map to provide the road guidance to the user.

In this car navigation apparatus 1, when the user operates the operator for the marking installed in the operating unit 13, on the basis of the position information of the current position detected by the GPS unit 5 in response to this operation, the download server 2 is accessed, and the shop and facility which have this marked position as the address are detected, and the detailed information related to these shop and facility is obtained and recorded in the HDD 15. Consequently, in the car navigation apparatus 1, only the operation of the operator for the marking enables the information of the shop name, the genre and the like to be obtained and automatically registered, which can simplify the process for registering the shop and the like discovered while the vehicle is running.

However, in the above-mentioned registering method, there may be a case where a plurality of shops and facilities exist in the address marked by the user as mentioned above. Consequently, in this car navigation apparatus 1, the taste of the user is detected from the tendency database 15A in which the number of the items registered in the favorite list by the user is totaled for each genre. If the plurality of shops and facilities are detected, the shops and facilities which satisfy this taste are selected, and the detailed information is obtained. It can be said that the thus-obtained detailed information is the information related to the shops and facilities which are generally intended by the marking operation of the user, in this embodiment, it is consequently possible to surely obtain and register the detailed information of the shops and facilities which are desired by the user.

Also, in the case of obtaining the detailed information as mentioned above, the various information can be obtained. Thus, in the car navigation apparatus 1, the information with regard to a business is assigned to one of the above-mentioned information, and the mark is displayed on the map so as to identify whether or not it is open, in accordance with the information with regard to this business. Hence, the user can avoid a useless errand, such as a case where the shop is closed because of its regular holiday although the user goes all the way to the shop. Correspondingly thereto, the convenience can be improved.

Also, the information of the recommended goods and the like is assigned to one of the thus-obtained information. Hence, similarly to the case of providing to the user the information with regard to the shops and facilities which are recorded in the optical disc, by selecting the mark displayed on the map as mentioned above, the detailed information of the recommended goods and the like is provided to the user, and the user's convenience is improved.

### (3) Effect of Embodiment

According to the above-mentioned configuration, on the basis of the position information related to the current position when the user carries out the marking, the server is accessed to obtain the information of the marked shops and facilities. Then, in accordance with the taste of the user, the shops and facilities are specified, which can simplify the process for registering the shop and the like discovered while the vehicle is running.

Also, at this time, in accordance with the thus-detailed information, the displaying of the mark is switched between the case where the shop is open and the case where the shop is closed. Thus, the user's convenience can be improved.

### Second Embodiment

In this embodiment, the download server side carries out a part of the processes in the car navigation apparatus according to the above-mentioned first embodiment. It is noted that this embodiment has the same configuration as the first embodiment, except that the process tasks of the car navigation apparatus and the download server are different. Thus, in the following explanation, the configuration shown in Fig. 2 is also applied for explanation.

That is, in this embodiment, in the CPU 12 in the car navigation apparatus 1 notifies the download server 2 of the position information of the current position and the number of the items in each genre in the tendency database 15A registered by the user, when the user executes the operation of the marking. The download server 2 detects the shops and facilities which exist in the thus-notified current position, and reports the detailed information of this detected shop and the like to the car navigation apparatus 1. In a case where a plurality of shops and facilities are detected at this time, the shops and facilities which satisfy the taste of the user are selected on the basis of the record of the tendency database 15A notified by the car navigation apparatus 1, and the detailed information related to this selected shop and the like is provided to the car navigation apparatus 1.

The effect similar to that of the first embodiment can be obtained, even in a case where the server side specifies the shop or the like on the basis of the taste of the user, as described in this embodiment. Also, the burden on the side of the car navigation apparatus 1 can be reduced because the server side bears the process as mentioned above.

### Third Embodiment

By the way, in the above-mentioned second embodiment, the case is described in which the tendency database is held on the side of the car navigation apparatus. However, the present invention is not limited thereto. This tendency database may be held on the server side.

Also, in the above-mentioned embodiments, the case is described in which the present invention is applied to the car navigation apparatus and the download server thereof. However, the present invention is not limited to the case. For example, the present invention can be widely applied to: the various apparatuses having the function of the navigation apparatus for displaying the map and providing the road guidance to the user, such as a portable telephone, a server which provides the service to this portable telephone, PDA (Personal Digital Assistants), a server which provides the service to this PDA, and the like; and the related configuration.

The present invention can be applied to, for example, a car navigation apparatus.

## Claims

1. A navigation apparatus (1) which displays a mark indicative of a genre of a shop and/or facility on a map for guiding a user along a road, said navigation apparatus comprising:
an operator (13) for receiving an operation of a marking carried out by the user;
position information obtaining means (5) for obtaining position information of a current position through an operation of said operator;
information obtaining means (12) for accessing a download server (2) on the basis of said position information and obtaining and recording detailed information of said shop and/or facility at said current position; and
displaying means (10) for displaying a mark corresponding to the obtained detailed information on said map, and **characterized by**:
further comprising a tendency database (15A) in which the number of shops and/or facilities of each genre registered in a favourite list of the user is totalized, thereby indicating the taste of the user; and
whereby said information obtaining means (12) is arranged to detect a genre of each shop and/or facility obtained on the basis of said position information, and selectively obtains and records said detailed information of said shop and/or facility satisfying said taste of the user on the basis of said tendency database (15A), in accordance with the detected genre.

2. The navigation apparatus (1) as claimed in Claim 1, wherein:
said displaying means (10) switches the display of said mark between a case where the shop and/or the facility is open and a case where the shop and/or facility is closed on the basis of said detailed information.

3. The navigation apparatus (1) as claimed in Claim 1, wherein:
said displaying means (10) displays a mark indicating that said shop and/or facility is closed superposing on said mark corresponding to the detailed information in a case where said shop and/or facility matching the taste of the user is not open in accordance with said detailed information.

4. A service providing method using a navigation apparatus for displaying a mark indicative of a genre of a shop and/or facility on a map for guiding a user along a road, said service providing method comprising:
a position information obtaining step of obtaining position information of a current position through a marking operation carried out by the user;
an information obtaining step of accessing a download server on the basis of said position information and obtaining and recording detailed information of said shop and/or facility at said current position; and
a displaying step of displaying a mark corresponding to the obtained detailed information on said map, and **characterized in that**:
said information obtaining step further comprises obtaining information indicating the taste of the user from a tendency database in which the number of shops and/or facilities of each genre registered in a favourite list of the user is totalized; and
said information obtaining step detects a genre of each shop and/or facility obtained on the basis of said position information, and selectively obtains and records said detailed information of said shop and/or facility satisfying said taste of the user on the basis of said tendency database, in accordance with the detected genre.

5. The service providing method as claimed in Claim 4, wherein:
the display of said mark is switched between a case where the shop and/or the facility is open and a case where the shop and/or facility is closed on the basis of said detailed information.

6. The service providing method as claimed in Claim 4, wherein:
a mark indicating that said shop and/or facility is closed is displayed superposing on said mark corresponding to the detailed information in a case where said shop and/or facility matching the taste of the user is not open in accordance with said detailed information.

7. A service providing method using a navigation apparatus for displaying a mark indicative of a genre of a shop and/or facility on a map for guiding a user along a road, said service providing method comprising:
an information obtaining step of obtaining position information of a current position related to a marking operation carried out by the user in said navigation apparatus, through communicating means, and information indicative of a taste of the user;
an information detecting step of accessing a download server on the basis of said position information and detecting detailed information of said shop and/or facility which is located at said current position and satisfies said taste of the user; and
an information reporting step of reporting said detailed information detected at said information detecting step to said navigation apparatus,
**characterized in that**:
said information indicative of a taste of the user is obtained from a tendency database in which the number of shops and/or facilities of each genre registered in a favourite list of the user is totalized; and
said information detecting step further comprises detecting a genre of a shop and/or facility on the basis of said position information, and selectively detecting detailed information of said shop and/or facility satisfying said taste of the user on the basis of said tendency database, in accordance with the detected genre.

8. The service providing method as claimed in Claim 7, wherein:
the display of said mark is switched between a case where the shop and/or the facility is open and a case where the shop and/or facility is closed on the basis of said detailed information.

9. The service providing method as claimed in Claim 7, wherein:
a mark indicating that said shop and/or facility is closed is displayed superposing on said mark corresponding to the detailed information in a case where said shop and/or facility matching the taste of the user is not open in accordance with said detailed information.

## Patentansprüche

1. Navigationsgerät, das eine Marke, die eine Gattung einer Verkaufsstelle und/oder einer Einrichtung anzeigt, auf einer Karte zum Führen eines Benutzers entlang einer Straße anzeigt, wobei das Navigationsgerät aufweist:
eine Operatoreinrichtung (13) zum Empfang einer vom Benutzer ausgeführten Operation zu einer Markierung,
eine Positionsinformationserhaltungseinrichtung (5) zum Erhalten von Positionsinformation einer laufenden Position durch eine Operation der Operatoreinrichtung,
eine Informationserhaltungseinrichtung (12) zum Zugreifen auf einen Herunterladeserver (2) auf der Basis der Positionsinformation und Erhalten und Aufzeichnen detaillierter Information der Verkaufsstelle und/oder Einrichtung bei der laufenden Position, und
eine Anzeigeeinrichtung (10) zum Anzeigen einer mit der erhaltenen detaillierten Information korrespondierenden Marke auf der Karte, **gekennzeichnet durch**
eine Tendenzdatenbank (15A), in der die Anzahl von in einer Favoritenliste des Benutzers registrierten Verkaufsstellen und/oder Einrichtungen jeder Gattung zusammengefasst ist und **dadurch** der Geschmack des Benutzers angezeigt wird,
wobei die Informationserhaltungseinrichtung (12) zum Detektieren einer Gattung jeder auf der Basis der Positionsinformation erhalten Verkaufsstelle und/oder Einrichtung ausgebildet ist und die detaillierte Information der Verkaufsstelle und/oder Einrichtung, die den Geschmack des Benutzers auf der Basis der Tendenzdatenbank (15A) zufrieden stellt, entsprechend der detektierten Gattung wahlweise erhält und aufzeichnet.

2. Navigationsgerät (1) nach Anspruch 1, wobei
die Anzeigeeinrichtung (10) die Anzeige der Marke zwischen einem Fall, bei dem die Verkaufsstelle und/oder Einrichtung offen ist, und einem Fall, bei dem die Verkaufsstelle und/oder Einrichtung geschlossen ist, auf der Basis der detaillierten Information schaltet.

3. Navigationsgerät (1) nach Anspruch 1, wobei
die Anzeigeeinrichtung (10) eine Marke, die anzeigt, dass die Verkaufsstelle und/oder Einrichtung geschlossen ist, auf der Marke, die mit der detaillierten Information korrespondiert, in einem Fall, bei dem die den Geschmack des Benutzers zufrieden stellende Verkaufsstelle und/oder Einrichtung nicht offen ist, entsprechend der detaillierten Information überlagert anzeigt.

4. Dienstbereitstellungsverfahren, das ein Navigationsgerät zur Anzeige einer eine Gattung einer Verkaufsstelle und/oder einer Einrichtung anzeigenden Marke auf einer Karte zum Führen eines Benutzers entlang einer Straße benutzt, wobei das Dienstbereitstellungsverfahren aufweist:
einen Positionsinformationserhaltungsschritt zum Erhalten von Positionsinformation einer laufenden Position durch eine vom Benutzer ausgeführte Markierungsoperation,
einen Informationserhaltungsschritt zum Zugreifen auf einen Herunterladeserver auf der Basis der Positionsinformation und Erhalten und Aufzeichnen detaillierter Information der Verkaufsstelle und/oder Einrichtung bei der laufenden Position, und
einen Anzeigeschritt zum Anzeigen einer mit der erhaltenen detaillierten Information korrespondierenden Marke auf der Karte, **dadurch gekennzeichnet, dass**
der Informationserhaltungsschritt außerdem ein Erhalten von den Geschmack des Benutzers anzeigender Information aus einer Tendenzdatenbank, in der die Anzahl von in einer Favoritenliste des Benutzers gespeicherten Verkaufsstellen und/oder Einrichtungen jeder Gattung zusammengefasst ist, aufweist und
der Informationserhaltungsschritt eine Gattung jeder auf der Basis der Positionsinformation erhaltenen Verkaufsstelle und/oder Einrichtung detektiert und die detaillierte Information der Verkaufsstelle und/oder der Einrichtung, die den Geschmack des Benutzers auf der Basis der Tendenzdatenbank zufrieden stellt, entsprechend der detektierten Gattung wahlweise erhält und aufzeichnet.

5. Dienstbereitstellungsverfahren nach Anspruch 4, wobei
die Anzeige der Marke zwischen einem Fall, bei dem die Verkaufsstelle und/oder Einrichtung offen ist, und einem Fall, bei dem die Verkaufsstelle und/oder Einrichtung geschlossen ist, auf der Basis der detaillierten Information geschaltet wird.

6. Dienstbereitstellungsverfahren nach Anspruch 4, wobei
eine Marke, die anzeigt, dass die Verkaufsstelle und/oder Einrichtung geschlossen ist, auf der Marke, die mit der detaillierten Information korrespondiert, in einem Fall, bei dem die den Geschmack des Benutzers zufrieden stellende Verkaufsstelle und/oder Einrichtung nicht offen ist, entsprechend der detaillierten Information überlagert angezeigt wird.

7. Dienstbereitstellungsverfahren, das ein Navigationsgerät zur Anzeige einer eine Gattung einer Verkaufsstelle und/oder einer Einrichtung abzeigenden Marke auf einer Karte zum Führen eines Benutzers entlang einer Straße benutzt, wobei das Dienstbereitstellungsverfahren aufweist:
einen Informationserhaltungsschritt zum Erhalten von Positionsinformation einer laufenden Position bezüglich einer vom Benutzer im Navigationsgerät durch eine Kommunikationseinrichtung ausgeführten Markierungsoperation und von Information, die einen Geschmack des Benutzers anzeigt,
einen Informationsdetektierungsschritt zum Zugreifen auf einen Herunterladeserver auf der Basis der Positionsinformation und Detektieren detaillierter Information der bei der laufenden Position lokalisierten und den Geschmack des Benutzers zufrieden stellenden Verkaufsstelle und/oder Einrichtung, und
einen Informationsübermittlungsschritt zum Übermitteln der beim Informationsdetektierungsschritt detektierten detaillierten Information zum Navigationsgerät,
**dadurch gekennzeichnet, dass**
die einen Geschmack des Benutzers anzeigende Information aus einer Tendenzdatenbank, in der die Anzahl von in einer Favoritenliste des Benutzers registrierten Verkaufsstellen und/oder Einrichtungen jeder Gattung zusammengefasst ist, erhalten wird, und
der Informationsdetektierungsschritt außerdem Detektieren einer Gattung einer Verkaufsstelle und/oder Einrichtung auf der Basis der Positionsinformation und wahlweise Detektieren von detaillierter Information der den Geschmack des Benutzers auf der Basis der Tendenzdatenbank zufrieden stellenden Verkaufsstelle und/oder Einrichtung entsprechend der detektierten Gattung aufweist.

8. Dienstbereitstellungsverfahren nach Anspruch 7, wobei
die Anzeige der Marke zwischen einem Fall, bei dem die Verkaufsstelle und/oder Einrichtung offen ist, und einem Fall, bei dem die Verkaufsstelle und/oder Einrichtung geschlossen ist, auf der Basis der detaillierten Information geschaltet wird.

9. Dienstbereitstellungsverfahren nach Anspruch 7, wobei
eine Marke, die anzeigt, dass die Verkaufsstelle und/oder Einrichtung geschlossen ist, auf der Marke, die mit der detaillierten Information korrespondiert, in einem Fall, bei dem die den Geschmack des Benutzers zufrieden stellende Verkaufsstelle und/oder Einrichtung nicht offen ist, entsprechend der detaillierten Information überlagert angezeigt wird.

## Revendications

1. Dispositif de navigation (1) qui affiche un repère indiquant la nature d'un magasin et/ou établissement sur une carte en vue de guider un utilisateur sur une route, ledit dispositif de navigation comprenant :
un dispositif de commande (13) destiné à recevoir une opération de repérage exécutée par l'utilisateur,
un moyen d'obtention d'informations de position (5) destiné à obtenir des informations de position d'une position actuelle par l'intermédiaire d'une opération dudit dispositif de commande,
un moyen d'obtention d'informations (12) destiné à accéder à un serveur de téléchargement (2) sur la base desdites informations de position et à obtenir et à enregistrer des informations détaillées concernant ledit magasin et/ou établissement à ladite position actuelle, et
un moyen d'affichage (10) destiné à afficher un repère correspondant aux informations détaillées obtenues sur ladite carte, et **caractérisé en ce que** :
il comprend en outre une base de données de tendances (15A) dans laquelle le nombre de magasins et/ou établissements de chaque nature enregistrés dans une liste de favoris de l'utilisateur est totalisé, en indiquant de cette manière le goût de l'utilisateur, et
grâce à quoi ledit moyen d'obtention d'informations (12) est agencé pour détecter la nature de chaque magasin et/ou établissement obtenu sur la base desdites informations de position et obtient et enregistre sélectivement lesdites informations détaillées dudit magasin et/ou établissement satisfaisant ledit goût de l'utilisateur sur la base de ladite base de données de tendances (15A), en fonction de la nature détectée.

2. Dispositif de navigation (1) selon la revendication 1, dans lequel:
ledit moyen d'affichage (10) bascule l'affichage dudit repère entre un cas où le magasin et/ou établissement est ouvert et un cas où le magasin et/ou établissement est fermé sur la base desdites informations détaillées.

3. Dispositif de navigation (1) selon la revendication 1, dans lequel:
ledit moyen d'affichage (10) affiche un repère indiquant que ledit magasin et/ou établissement est fermé par superposition sur ledit repère correspondant aux informations détaillées dans un cas où ledit magasin et/ou établissement correspondant au goût de l'utilisateur n'est pas ouvert conformément auxdites informations détaillées.

4. Procédé de fourniture de services utilisant un dispositif de navigation destiné à afficher un repère indiquant la nature d'un magasin et/ou établissement sur une carte en vue de guider un utilisateur sur une route, ledit procédé de fourniture de services comprenant :
une étape d'obtention d'informations de position consistant à obtenir les informations de position d'une position actuelle par l'intermédiaire d'une opération de repérage exécutée par l'utilisateur,
une étape d'obtention d'informations d'accès à un serveur de téléchargement sur la base desdites informations de position et d'obtention et d'enregistrement des informations détaillées dudit magasin et/ou établissement à ladite position actuelle, et
une étape d'affichage consistant à afficher un repère correspondant aux informations détaillées obtenues sur ladite carte, et **caractérisé en ce que** :
ladite étape d'obtention d'informations comprend en outre l'obtention d'informations indiquant le goût de l'utilisateur à partir d'une base de données de tendances où le nombre de magasins et/ou établissements de chaque nature enregistrés dans une liste de favoris de l'utilisateur est totalisé, et
ladite étape d'obtention d'informations détecte la nature de chaque magasin et/ou établissement obtenu sur la base desdites informations de position, et obtient et enregistre sélectivement lesdites informations détaillées dudit magasin et/ou établissement satisfaisant ledit goût de l'utilisateur sur la base de ladite base de données de tendances, en fonction de la nature détectée.

5. Procédé de fourniture de services selon la revendication 4, dans lequel :
l'affichage dudit repère est basculé entre un cas où le magasin et/ou établissement est ouvert et un cas où le magasin et/ou établissement est fermé sur la base desdites informations détaillées.

6. Procédé de fourniture de services selon la revendication 4, dans lequel :
un repère, indiquant que ledit magasin et/ou établissement est fermé, est affiché par superposition sur ledit repère correspondant aux informations détaillées dans un cas où ledit magasin et/ou établissement correspondant au goût de l'utilisateur n'est pas ouvert en fonction desdites informations détaillées.

7. Procédé de fourniture de services utilisant un dispositif de navigation destiné à afficher un repère indiquant la nature d'un magasin et/ou établissement sur une carte en vue de guider un utilisateur sur une route, ledit procédé de fourniture de services comprenant :
une étape d'obtention d'informations consistant à obtenir des informations de position d'une position actuelle par rapport à une opération de repérage exécutée par l'utilisateur dans ledit dispositif de navigation, par l'intermédiaire d'un moyen de communication, et des informations indiquant un goût de l'utilisateur,
une étape de détection d'informations consistant à accéder à un serveur de téléchargement sur la base desdites informations de position et à détecter des informations détaillées dudit magasin et/ou établissement qui est situé à ladite position actuelle et qui satisfait ledit goût de l'utilisateur, et
une étape de signalisation d'informations destinée à rapporter lesdites informations détaillées détectées lors de ladite étape de détection d'informations audit dispositif de navigation,
**caractérisé en ce que** :
lesdites informations indiquant un goût de l'utilisateur sont obtenues à partir d'une base de données de tendances où le nombre de magasins et/ou établissements de chaque nature enregistrés dans une liste de favoris de l'utilisateur est totalisé, et
ladite étape de détection d'informations comprend en outre la détection de la nature d'un magasin et/ou établissement sur la base desdites informations de position, et la détection sélective des informations détectées dudit magasin et/ou établissement satisfaisant ledit goût de l'utilisateur sur la base de ladite base de données de tendances, en fonction de la nature détectée.

8. Procédé de fourniture de services selon la revendication 7, dans lequel :
l'affichage dudit repère est basculé entre un cas où le magasin et/ou établissement est ouvert et un cas où le magasin et/ou établissement est fermé sur la base desdites informations détaillées.

9. Procédé de fourniture de services selon la revendication 7, dans lequel :
un repère indiquant que ledit magasin et/ou établissement est fermé, est affiché par superposition sur ledit repère correspondant aux informations détaillées dans un cas où ledit magasin et/ou établissement correspondant au goût de l'utilisateur n'est pas ouvert en fonction desdites informations détaillées.
